(19) Europäisches Patentamt
European Patent Office
Office européen des brevets

(11) Veröffentlichungsnummer: **0 076 235**
**A1**

(12) # EUROPÄISCHE PATENTANMELDUNG

(21) Anmeldenummer: 82810394.5

(22) Anmeldetag: 22.09.82

(51) Int. Cl.³: C 09 B 3/36
D 06 P 1/22

(30) Priorität: 28.09.81 CH 6233/81

(43) Veröffentlichungstag der Anmeldung: 06.04.83 Patentblatt 83/14

(84) Benannte Vertragsstaaten: CH DE FR GB LI

(71) Anmelder: CIBA-GEIGY AG
Patentabteilung Postfach
CH-4002 Basel(CH)

(72) Erfinder: Tzikas, Athanassios, Dr.
Muttenzerstrasse 78
CH-4133 Pratteln(CH)

(54) **Verfahren zur Herstellung von Küpenfarbstoffen.**

(57) Durch Umsetzung von Dihydroxydibenzanthron und einem Aldehyd in Chlorsulfonsäure erhält man blaue Küpenfarbstoffe. Diese können gegebenenfalls chloriert und/oder durch Sulfonamidogruppen substituiert werden. Sie eignen sich insbesondere zum Färben von Cellulosefasern.

EP 0 076 235 A1

CIBA-GEIGY AG
4002 Basel

1-13569/+

# Verfahren zur Herstellung von Küpenfarbstoffen

Die vorliegende Erfindung betrifft ein Verfahren zur Herstellung von Küpenfarbstoffen sowie die Farbstoffe, soweit sie neu sind, und deren Verwendung zum Färben von Cellulose.

Gegenstand der Erfindung ist ein Verfahren zur Herstellung von Küpenfarbstoffen der Formel I

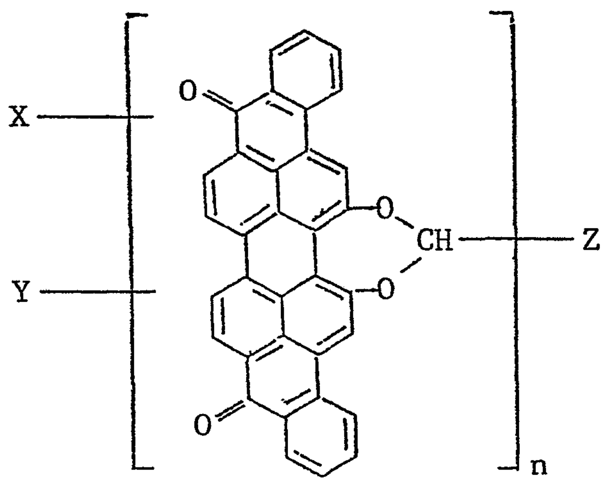

(I)

worin

n 1 oder 2,

Z H, gegebenenfalls substituiertes Alkyl, gegebenenfalls substituiertes Aryl oder einen heterocyclischen Rest, falls n gleich 1 ist, oder eine direkte Bindung, gegebenenfalls substituiertes Alkylen, gegebenenfalls substituiertes Arylen, oder einen heterocyclischen Rest, falls n gleich 2 ist,

X H, Cl oder einen Rest der Formel $-SO_2T$, wobei T den Rest eines aliphatischen oder aromatischen primären oder sekundären Amins darstellt, und

Y H oder Cl bedeutet,

das dadurch gekennzeichnet ist, dass man n Aequivalente Dihydroxydibenzanthron der Formel II

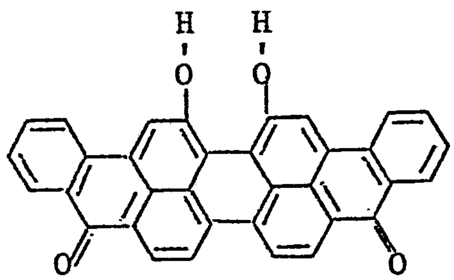

(II)

in Chlorsulfonsäure mit einem Aldehyd der Formel III

$$Z - (CHO)_n \qquad (III),$$

wobei Z und n die oben angegebene Bedeutung aufweisen, kondensiert und anschliessend, falls man Farbstoffe der Formel I herstellt, worin X und/oder Y nicht Wasserstoff bedeuten, chloriert und/oder mit Thionylchlorid und einem Amin der Formel IV

$$H - T \qquad (IV)$$

umsetzt, wobei T die oben angegebene Bedeutung aufweist.

Die Alkylreste Z können geradkettig oder verzweigt sein und auch substituiert sein, z.B. durch Halogen, insbesondere Chlor, $C_1$-$C_5$-Alkoxy oder Phenyl. Vorzugsweise besitzen sie 1 bis 5 Kohlenstoffatome. Es handelt sich beispielsweise um folgende Reste: Methyl, Ethyl, Propyl, iso-Propyl, n-Butyl, tert.-Butyl, Pentyl, Chlormethyl, 2-Chlorethyl, Phenylmethyl oder Chlorphenylmethyl.

Als Arylreste Z kommen z.B. Phenyl- oder Naphthylreste in Frage oder auch diese Reste, welche weitere ankondensierte Ringe aufweisen, wie z.B. Anthrachinonylreste. Alle diese Reste können ein oder mehrmals substituiert sein, z.B. durch

$C_1$-$C_5$-Alkyl, $C_1$-$C_5$-Alkoxy, Halogen, wie Brom oder vorzugsweise Chlor, Sulfo, Nitro, Amino, $C_1$-$C_5$-Alkylamino, Di-$C_1$-$C_5$-Alkylamino. Beispiele für solche Arylreste sind: Phenyl, 1- oder 2-Naphthyl, 2- Anthrachinonyl, o-, m- oder p-$C_1$-$C_5$-Alkylphenyl, o- oder p-Chlorphenyl, 2,4-Dichlorphenyl, m-Nitrophenyl, o-Sulfophenyl, 2,4-Disulfophenyl, p-Aminophenyl, p-Dimethylaminophenyl oder p-N-Methyl-N-(2-chlorethyl)-aminophenyl.

Als heterocyclische Reste Z kommen vorzugsweise, falls n gleich 1 ist, Pyridylreste, wie 2-, 3- oder 4-Pyridyl oder Furylreste, wie 2-Furyl, oder, falls n gleich 2 ist, 2,5-Thiopenylen in Betracht.
Vorzugsweise stellt Z, falls n gleich 1 ist, Wasserstoff, $C_1$-$C_3$-Alkyl, Phenyl oder durch Methyl, Chlor, Nitro, Sulfo oder Amino substituiertes Phenyl dar.

Falls n gleich 2 ist, so stellt Z die direkte Bindung, eine gegebenenfalls substituierte Alkylen- oder Arylengruppe oder einen heterocyclischen Rest dar. Beispielsweise kommen in Frage: Ethylen, Propylen, 1,3- oder 1,4-Phenylen, Naphthylen oder 2,5-Thiophenylen. Vorzugsweise stellt Z, falls n gleich 2 ist, die direkte Bindung oder 1,3- oder 1,4-Phenylen dar.

Falls X eine Gruppe $-SO_2$-T bedeutet, so stellt T den Rest eines aliphatischen oder aromatischen primären oder sekundären Amins dar. Solche Amine sind z.B.: $C_1$-$C_5$-Alkylamine oder $C_1$-$C_5$-Dialkylamine, wie Dimethylamin, Diethylamin, iso-Butylamin, n-Pentylamin, Methylethylamin, sowie diese Amine, welche noch durch $C_1$-$C_5$-Alkoxy oder Phenyl substituiert sind, Piperidin, Morpholin, Anilin, N-$C_1$-$C_5$-Alkylanilin, oder im Phenylring durch $C_1$-$C_5$-Alkyl, $C_1$-$C_5$-Alkoxy, Halogen, wie Brom oder Chlor, Nitro oder Sulfo substituiertes Anilin. Bevorzugte Amine sind Dimethyl- oder Diethylamin, Piperidin, Morpholin, Anilin, $C_1$-$C_3$-N-Alkylanilin, sowie im Phenylring einmal durch Chlor, Methyl oder Methoxy substituiertes Anilin.

Eine bevorzugte Ausführungsform des erfindungsgemässen Verfahrens betrifft ein Verfahren zur Herstellung von Küpenfarbstoffen der Formel V

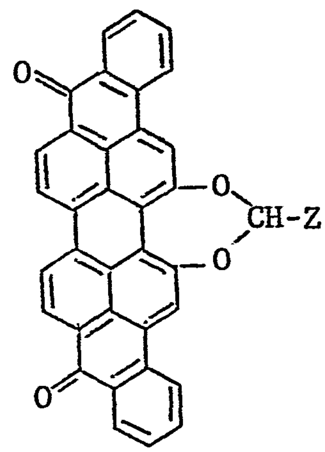

(V)

worin Z Wasserstoff, $C_1$-$C_3$-Alkyl, Phenyl oder durch Methyl, Chlor, Nitro, Sulfo oder Amino substituiertes Phenyl darstellt, dadurch gekennzeichnet, dass man Dihydroxydibenzanthron der Formel II

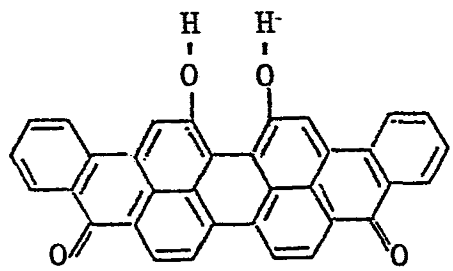

(II)

in Chlorsulfonsäure mit einem Aldehyd der Formel VI

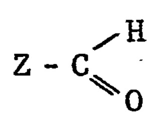

(VI)

umsetzt, wobei Z die oben angegebene Bedeutung aufweist.

Eine weitere bevorzugte Ausführungsform des erfindungsgemässen Verfahrens betrifft ein Verfahren zur Herstellung von Küpenfarbstoffen der Formel VII

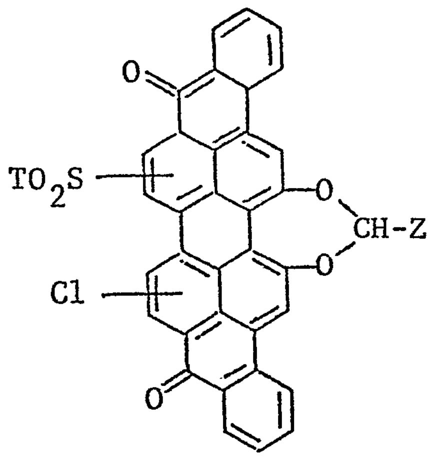

(VII)

worin Z Wasserstoff, $C_1$-$C_3$-Alkyl, Phenyl oder durch Methyl, Chlor, Nitro, Sulfo oder Amino substituiertes Phenyl darstellt und T den Rest von Dimethyl- oder Diethylamin, Piperidin, Morpholin, Anilin, $C_1$-$C_3$-N-Alkylanilin, oder im Phenylring einmal durch Chlor, Methyl oder Methoxy substituiertem Anilin bedeutet, dadurch gekennzeichnet, dass man Dihydroxydibenzanthron der Formel II

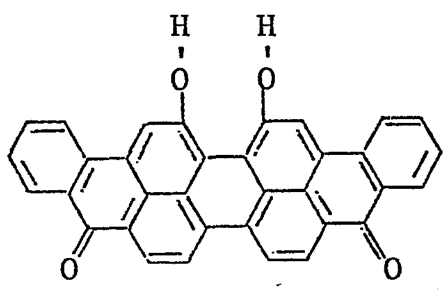

(II)

in Chlorsulfonsäure mit einem Aldehyd der Formel VI

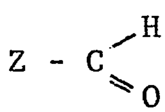

(VI)

umsetzt, wobei Z die oben angegebene Bedeutung aufweist, anschliessend gleichzeitig oder in beliebiger Reihenfolge nacheinander chloriert und mit Thionylchlorid umsetzt und zum Schluss mit Dimethyl- oder Diethylamin, Piperidin, Morpholin, Anilin, $C_1$-$C_3$-N-Alkylanilin oder im Phenylring einmal durch Chlor, Methyl oder Methoxy substituiertem Anilin zur Reaktion bringt.

Die Reaktion zwischen Dihydroxydibenzanthron der oben angegebenen Formel II mit einem Aldehyd der Formel III bzw. VI wird in Chlorsulfonsäure ausgeführt. Aldehyd und Dihydroxydibenzanthron werden dabei vorzugsweise in etwa äquivalenten Mengen eingesetzt. Die Menge an Chlorsulfonsäure richtet sich nach der Löslichkeit der Ausgangs- und Endprodukte. Im allgemeinen geht man so vor, dass man Dihydroxydibenzanthron in die ca. 3- bis 4fache Menge Chlorsulfonsäure gibt und anschliessend den Aldehyd zutropft. Die Reaktionstemperatur wird durch Kühlen zwischen 0 und 30°C, vorzugsweise 5 bis 20°C gehalten. Anschliessend wird die Reaktionsmischung auf eine Eis/Wasser-Mischung gegossen, wobei das Kondensationsprodukt ausfällt.

Falls Farbstoffe der Formel I hergestellt werden sollen, worin X und/oder Y Chlor bedeuten so wird die Chlorierung vorzugsweise unmittelbar im Anschluss an die Kondensation ohne Isolierung des Kondensationsproduktes ausgeführt. Es kommen die üblichen Chlorierungsmittel in Frage. Vorzugsweise wird Chlor, gegebenenfalls unter Zugabe von katalytischen Mengen Jod, verwendet. Die Reaktionstemperatur beträgt in diesem Falle vorteilhafterweise 10 bis 25°C. Anschliessend wird der Farbstoff wie oben ausgeführt isoliert.

Zur Herstellung von Farbstoffen der Formel I, worin X einen Rest der Formel $-SO_2T$ darstellt, wobei T der Rest eines aliphatischen oder aromatischen primären oder sekundären Amins ist, versetzt man vorzugsweise die Reaktionslösung, welche das gegebenenfalls chlorierte Kondensationsprodukt aus Dihydroxydibenzanthron und Aldehyd enthält, mit Thionylchlorid und erhöht die Temperatur auf 40 bis 90°C, vorzugsweise 55 bis 70°C. Nach einer Reaktionszeit von ca. 1 bis 3 Stunden wird das Reaktionsgemisch auf eine

Eis/Wasser-Mischung gegossen und das erhaltene Sulfochlorid des Farbstoffes abfiltriert. Dieses wird dann in einer Eis/Wasser-Mischung suspendiert und mit dem Amin umgesetzt. Man verwendet mindestens 2 Mol Amin pro Mol Sulfochlorid, vorzugsweise 2 bis 2,5 Mol. Anschliessend erwärmt man auf 40 bis 90°C, vorzugsweise 55 bis 70°C, und filtriert den ausgeschiedenen Farbstoff ab.

Statt Aldehyden kann man im erfindungsgemässen Verfahren auch Derivate von Aldehyden, wie z.B. Acetale einsetzen und anstelle von Dihydroxydibenzanthron können auch Dialkoxydibenzanthrone verwendet werden.

Ein besonderer Vorteil des erfindungsgemässen Verfahrens besteht darin, dass die Kondensation von Dihydroxydibenzanthron mit Aldehyd, die Chlorierung und die Sulfochlorrierung in dem gleichen Lösungsmittel, Chlorsulfonsäure, und ohne Isolierung der Zwischenprodukte durchgeführt wird.

Gegenüber der bekannten Kondensation von Dihydroxydibenzanthron und Aldehyden in konzentierter Schwefelsäure bietet das erfindungsgemässe Verfahren in Chlorsulfonsäure die überraschenden Vorteile, dass man bei niedrigerer Temperatur arbeiten kann und bessere Ausbeuten erhält. Zudem kann man in sehr viel konzentrierteren Lösungen bzw. Suspensionen arbeiten, so dass erheblich weniger Abfallschwefelsäure beseitigt bzw. aufgearbeitet werden muss.

Die Farbstoffe der Formel VIII

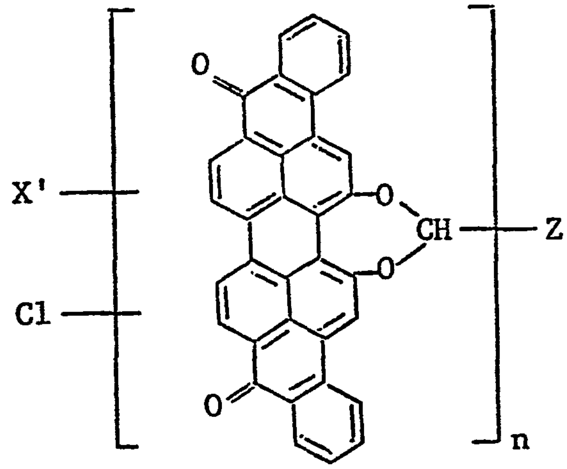

(VIII)

worin

n  1 oder 2,

Z  H, gegebenenfalls substituiertes Alkyl oder gegebenenfalls substituiertes Aryl, falls n gleich 1 ist, oder eine direkte Bindung, gegebenenfalls substituiertes Alkylen oder gegebenenfalls substituiertes Arylen, falls n gleich 2 ist, und

X'  Cl, oder einen Rest der Formel $-SO_2T$ bedeutet, wobei T den Rest eines aliphatischen oder aromatischen primären oder sekundären Amins darstellt,

sind neu und stellen einen weiteren Gegenstand der vorliegenden Erfindung dar.

Unter diesen sind diejenigen bevorzugt, bei denen n gleich 1 ist, Z Wasserstoff, $C_1$-$C_3$-Alkyl, Phenyl oder durch Methyl, Chlor, Nitro, Sulfo oder Amino substituiertes Phenyl darstellt und T den Rest von Dimethyl- oder Diethylamin, Piperidin, Morpholin, Anilin, $C_1$-$C_3$-N-Alkylanilin, oder im Phenylring einmal durch Chlor, Methyl oder Methoxy substituiertem Anilin, bedeutet.

Die Küpenfarbstoffe der Formel I eignen sich zum Färben und Bedrucken der verschiedensten Materialien in blauen Nuancen, insbesondere zum Färben und Bedrucken von Fasern aus natürlicher oder regenerierter Cellulose in Gegenwart von Reduktionsmitteln, wie z.B. Dithionit.

Die erhaltenen Färbungen zeichnen sich durch gute Egalität aus. Die Echtheiten sind allgemein sehr gut, insbesondere die Licht-, Wasser-, Chlor- und Sodakochechtheiten.

In den nachfolgenden Beispielen bedeuten Teile Gewichtsteile und Prozente Gewichtsprozente. Die Temperaturen sind in Grad Celsius angegeben.

Beispiel 1

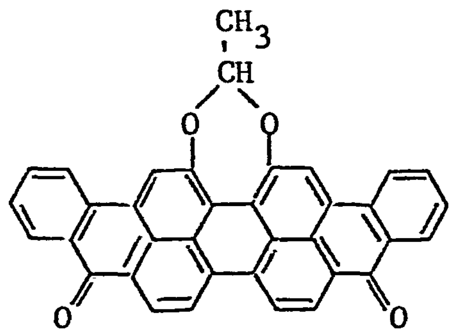

In 180 Teile Chlorsulfonsäure von 5° werden portionenweise 49 Teile Dihydroxydibenzanthron so eingetragen, dass die Temperatur nicht über 10° steigt (ca. 20 Minuten). Dann werden 18 Teile Acetaldehyd zugetropft, dass die Temperatur nicht über 20° steigt (ca. 15 Minuten). Die Suspension wird nun bei Raumtemperatur 1 Stunde gerührt und dann auf eine Eis/Wasser-Mischung ausgetragen. Der ausgefallene Farbstoff wird filtriert, mit Wasser neutral gewaschen und im Vakuumtrockenschrank bei 80° getrocknet.

Man erhält 51 Teile Farbstoff der oben angegebenen Struktur, welcher Baumwolle marineblau färbt.

Beispiel 2

Arbeitet man wie im Beispiel 1 beschrieben, ersetzt jedoch 18 Teile Acetaldehyd durch 15 Teile Formaldehyd-dimethylacetal, so erhält man 50 Teile Küpenfarbstoff der Formel

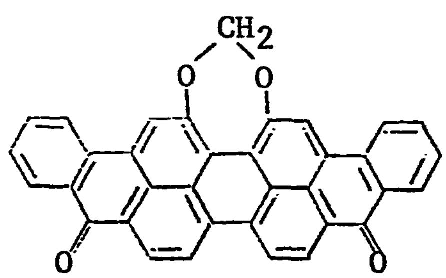

welcher Baumwolle marineblau färbt.

Beispiele 3 bis 25

Arbeitet man wie im Beispiel 1 beschrieben, ersetzt jedoch 18 Teile Acetaldehyd durch äquivalente Mengen Aldehyde der Formel Z-CHO, wobei Z die in Spalte 2 der folgenden Tabelle angegebene Bedeutung aufweist, so erhält man Küpenfarbstoffe der Formel

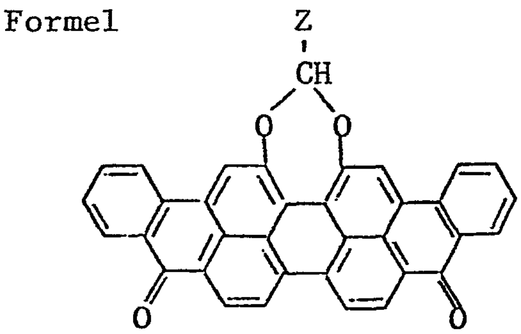

Diese Farbstoffe färben Baumwolle in der in Spalte 3 der Tabelle aufgeführten Nuance.

Tabelle

| Beispiel | Z | Nuance auf Baumwolle |
|---|---|---|
| 3 | 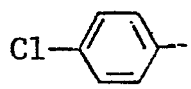 | marineblau |
| 4 | 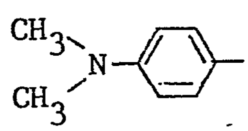 | marineblau |
| 5 | 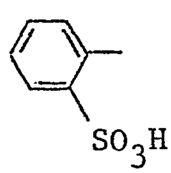 | neutrales Blau |
| 6 | $CH_3CH_2$- | marineblau |
| 7 | Cl-$CH_2$- | " |
| 8 | Cl-$CH_2$-$CH_2$- | " |
| 9 | 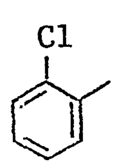 | " |

| Beispiel | Z | Nuance auf Baumwolle |
|---|---|---|
| 10 | 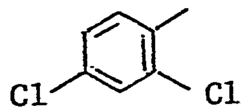 | marineblau |
| 11 | 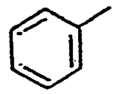 | neutrales Blau |
| 12 | 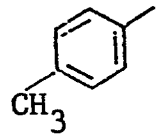 | " " |
| 13 | 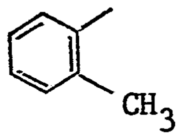 | " " |
| 14 | 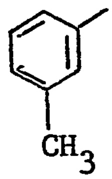 | " " |
| 15 | 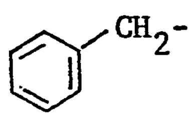 | " " |
| 16 | 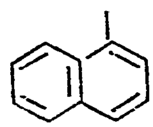 | " " |
| 17 | 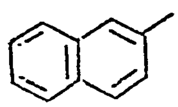 | " " |
| 18 | 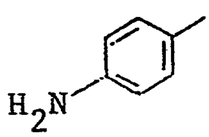 | marineblau |
| 19 | 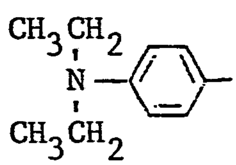 | " |

| Beispiel | Z | Nuance auf Baumwolle |
|---|---|---|
| 20 | 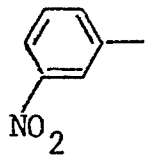 | marineblau |
| 21 | 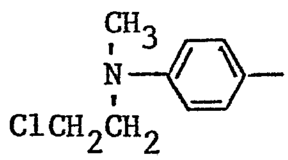 | marineblau |
| 22 | 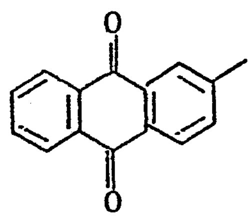 | rotstichig blau |
| 23 | 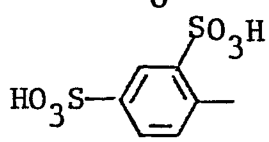 | grünstichig blau |
| 24 | 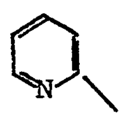 | marineblau |
| 25 | 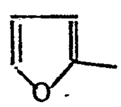 | marineblau |

Beispiel 26

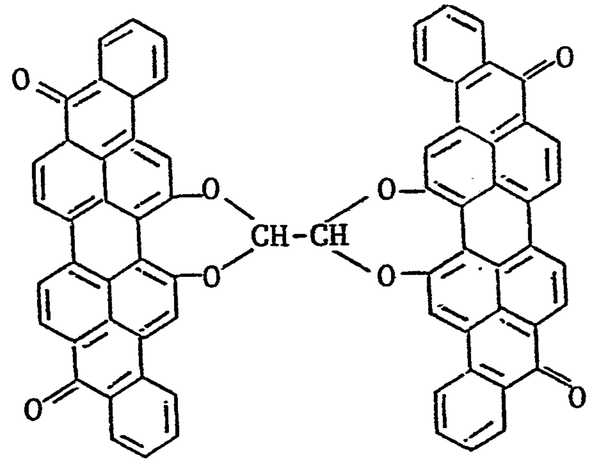

Zu 40 Teilen Chlorsulfonsäure von 5° werden portionenweise 9,8 Teile Dihydroxydibenzanthron so zugegeben, dass die Temperatur nicht über 10° steigt (ca. 20 Minuten). Dann werden 1,4 Teile Glyoxal (~40% Lösung in $H_2O$) so zugegeben, dass die Temperatur nicht über 20° steigt (ca. 15 Minuten). Die Suspension wird bei Raumtemperatur 1 Stunde gerührt und dann auf eine Eis/Wasser-Mischung ausgetragen. Der ausgefallene Farbstoff wird filtriert, mit Wasser neutral gewaschen und im Vakuumtrockenschrank bei 80° getrocknet.

Man erhält 10 Teile Farbstoff der oben angegebenen Struktur, welcher Baumwolle marineblau färbt.

Beispiele 27 bis 31

Arbeitet man wie im Beispiel 26 beschrieben, verwendet jedoch anstelle von 1,4 Teilen Glyoxal äquivalente Mengen der Aldehyde OHC-Z-CHO, wobei Z die in Spalte 2 der folgenden Tabelle aufgeführte Bedeutung hat, so erhält man Küpenfarbstoffe der Formel

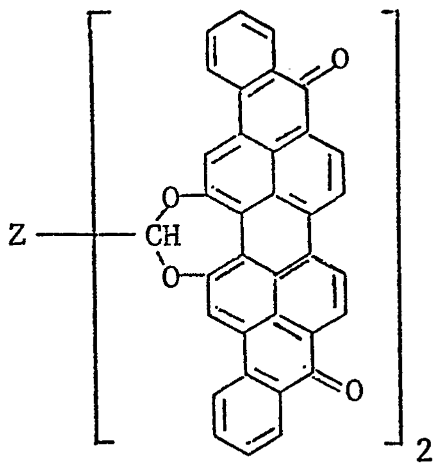

Diese färben Baumwolle in der in Spalte 3 angegebenen Nuance.

Tabelle

| Beispiel | Z | Nuance auf Baumwolle |
|---|---|---|
| 27 | 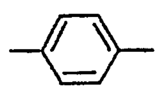 | marineblau |
| 28 | 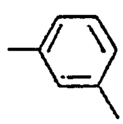 | " |
| 29 | 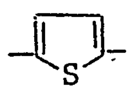 | " |
| 30 | 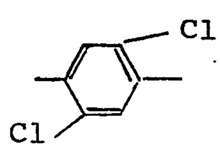 | " |
| 31 | $- CH_2-CH_2 -$ | " |

Beispiel 32

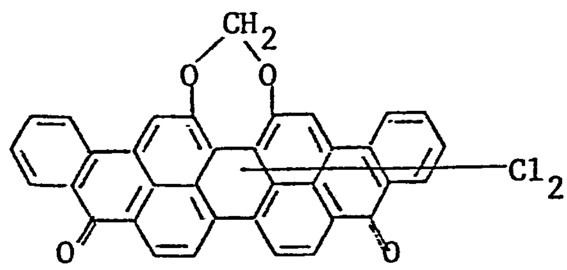

In 180 Teile Chlorsulfonsäure von 5° werden portionenweise 49 Teile Dihydroxydibenzanthron so eingetragen, dass die Temperatur nicht über 10° steigt (ca. 20 Minuten). Dann werden 15 Teile Formaldehyd-dimethylacetal so zugetropft, dass die Temperatur nicht über 20° steigt (ca. 15 Minuten). Die Suspension wird nun bei Raumtemperatur 1 Stunde gerührt. Anschliessend gibt man 2 Teile Jod zu und leitet 15 Teile Chlor bei Raumtemperatur ein (ca. 1 Stunde) und trägt die Suspension auf eine Eis/Wasser-Mischung aus. Der ausgefallene Farbstoff wird filtriert, mit Wasser neutral gewaschen und im Vakuumtrockenschrank bei 80° getrocknet. Man erhält 56 Teile Farbstoff der oben angegebenen Struktur, welcher Baumwolle marineblau färbt.

| | | | |
|---|---|---|---|
| Analyse: | Chlor | berechnet | 12,65 % |
| | | gefunden | 12,28 %. |

Beispiel 33

Arbeitet man wie im Beispiel 32 , leitet aber anstelle von 15 Teilen nur 7,5 Teile Chlor ein, so erhält man 53 Teile des Farbstoffes

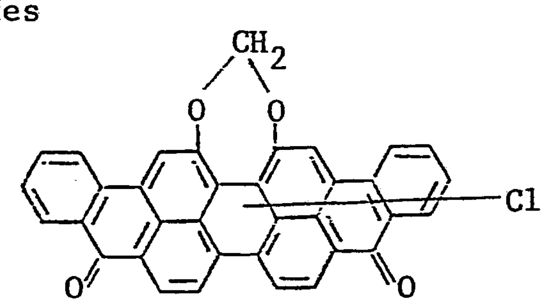

welcher Baumwolle marineblau färbt.

| | | | |
|---|---|---|---|
| Analyse: | Chlor | berechnet | 6,75 % |
| | | gefunden | 6,90 %. |

Beispiel 34

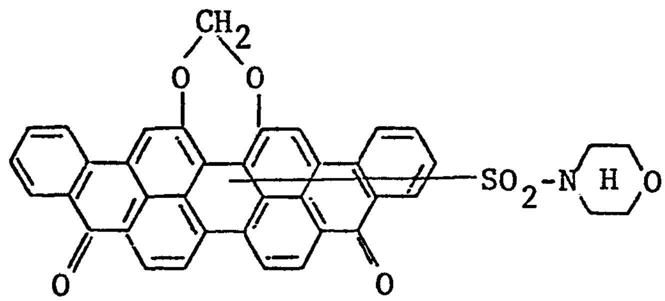

In 180 Teile Chlorsulfonsäure von 5° werden portionenweise 49 Teile Dihydroxydibenzanthron so eingetragen, dass die Temperatur nicht über 10° steigt (ca. 20 Minuten). Dann werden 15 Teile Formaldehyd-dimethylacetal so zugetropft, dass die Temperatur nicht über 20° steigt (ca. 15 Minuten). Die Suspension wird nun bei Raumtemperatur 1 Stunde gerührt, anschliessend gibt man 70 Teile Chlorsulfonsäure und 15 Teile Thionylchlorid zu. Die Suspension wird nun auf 60 bis 65° erhitzt, 2 Stunden bei 60 bis 65° gerührt, dann auf Raumtemperatur abkühlen gelassen und auf Eis ausgetragen. Der ausgefallene Farbstoff wird filtriert und mit Eis/Wasser neutral gewaschen. Das Nutschgut wird danach in einer Eis/Wasser-Mischung suspendiert und bei 0 bis 5° werden 30 Teile Morpholin innert 2 Stunden zugetropft. Danach wird auf 60° erwärmt und 2 Stunden bei 60 bis 65° gerührt. Dann wird die Suspension filtriert, der Rückstand mit Wasser neutral gewaschen und im Vakuumtrockenschrank bei 80° getrocknet. Man erhält 60 Teile Farbstoff der oben angegebenen Struktur, welcher Baumwolle blau färbt.

| | | | |
|---|---|---|---|
| Analyse: | Stickstoff | berechnet | 2,15 % |
| | | gefunden | 2,00 % |
| | Schwefel | berechnet | 4,93 % |
| | | gefunden | 4,90 %. |

Beispiele 35 bis 48

Arbeitet man wie im Beispiel 34, verwendet jedoch anstelle von 30 Teilen Morpholin äquivalente Mengen der Amine H-T, wobei T die in Spalte 2 der folgenden Tabelle aufgeführte Bedeutung hat, so erhält man Küpenfarbstoffe der Formel

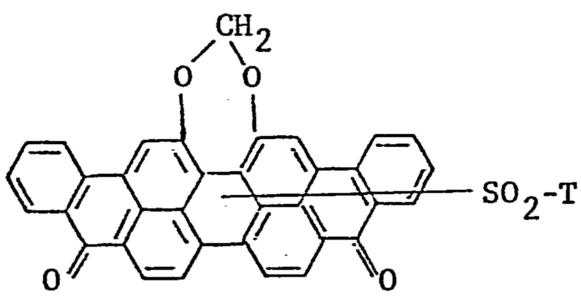

Diese Farbstoffe färben Baumwolle nach den üblichen Färbe methoden für Küpenfarbstoffe marineblau.

Tabelle

| Beispiel | T |
|---|---|
| 35 | 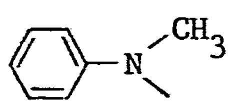 |
| 36 | 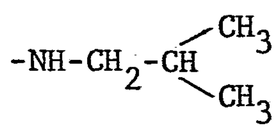 |
| 37 | 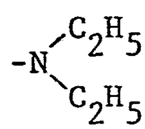 |
| 38 | $-HN-(CH_2)_4-CH_3$ |
| 39 | $-HN-(CH_2)_2-OCH_3$ |
| 40 | $-HN-(CH_2)_3-OCH_2CH_3$ |
| 41 | 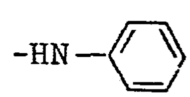 |

| Beispiel | T |
|---|---|
| 42 | 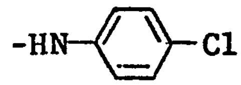 |
| 43 | 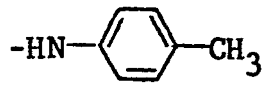 |
| 44 | 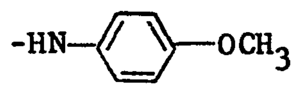 |
| 45 | 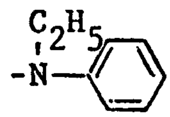 |
| 46 | 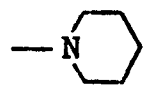 |
| 47 | 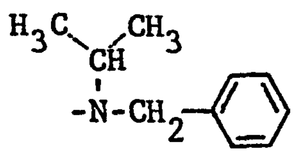 |
| 48 | 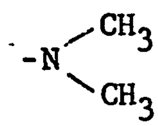 |

Beispiel 49

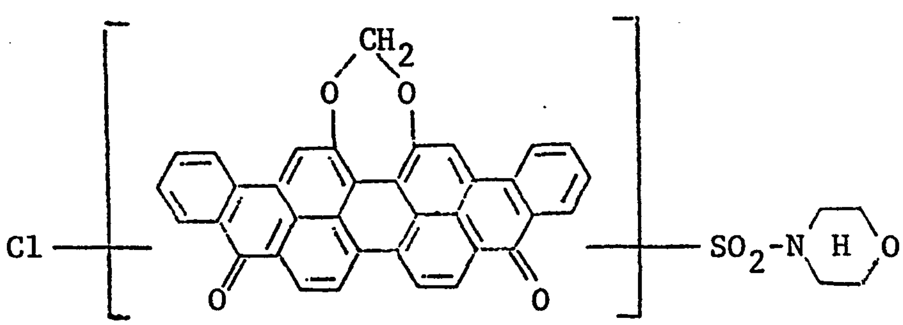

In 180 Teile Chlorsulfonsäure von 5° werden portionenweise 49 Teile Dihydroxydibenzanthron so eingetragen, dass die Temperatur nicht über 10° steigt (ca. 20 Minuten). Dann

werden 15 Teile Formaldehyd-dimethylacetal so zugetropft, dass die Temperatur nicht über 20° steigt (ca. 15 Minuten). Die Suspension wird nun bei Raumtemperatur 1 Stunde gerührt, anschliessend gibt man 1 Teil Jod zu, leitet 5 Teile Chlor bei Raumtemperatur ein (ca. 1 Stunde) und gibt 100 Teile Chlorsulfonsäure sowie 15 Teile Thionylchlorid zu. Die Suspension wird nun auf 60 bis 65° erhitzt und 2 Stunden bei 60 bis 65° gerührt, dann auf Raumtemperatur abkühlen gelassen und auf Eis ausgetragen. Der ausgefallene Farbstoff wird filtriert und mit Eis/Wasser neutral gewaschen. Das Nutschgut wird nun in Eis/Wasser-Mischung suspendiert und bei 0 bis 5° werden 30 Teile Morpholin innert 2 Stunden zugetropft. Danach wird auf 60° erwärmt und 2 Stunden bei 60 bis 65° gerührt. Dann wird die Suspension filtriert, der Rückstand mit Wasser neutral gewaschen und im Vakuumtrockenschrank bei 80° getrocknet. Man erhält 62 Teile Farbstoff der oben angegebenen Struktur, welcher Baumwolle blau färbt.

| | | | |
|---|---|---|---|
| Analyse: | Stickstoff | berechnet | 2,05 % |
| | | gefunden | 1,60 % |
| | Schwefel | berechnet | 4,69 % |
| | | gefunden | 4,20 % |
| | Chlor | berechnet | 5,18 % |
| | | gefunden | 4,70 %. |

Färbevorschrift

1 Teil Farbstoff wird mit 10 Vol.-Teilen Natronlauge von 36°Bé und 5 Teilen Natriumhydrosulfit in 200 Teilen Wasser bei 50 bis 70° verrührt. Einem Färbebad, das in 2000 Teilen Wasser 5 Vol.-Teile Natronlauge von 36°Bé und 3,7 Teile Natriumhydrosulfit enthält, gibt man die obige Stammküpe zu und geht bei 40° mit 100 Teilen Baumwolle ein. Nach 10 Minuten gibt man 15 Teile Natriumchlorid zu, nach 20 Minuten weitere 15 Teile und färbt bei 40° während 45 Minuten. Hierauf wird die Baumwolle abgequetscht, oxidiert und wie üblich fertiggestellt.

Pigmentfärbung

5 Teile Farbstoff werden mit 95 Teilen Dioctylphthalat vermischt und in einer Kugelmühle so lange vermahlen, bis die Farbstoffteilchen kleiner als 3 µm sind. 0,8 Teile dieser Dioctylphthalatpaste werden mit 13 Teilen Polyvinylchlorid, 7 Teilen Dioctylphthalat und 0,1 Teilen Cadmiumstearat vermischt und hierauf 5 Minuten auf dem Zweiwalzenstuhl bei 140° ausgewalzt. Man erhält ein gefärbtes Material mit guten Migrationseigenschaften und guter Lichtechtheit.

Lackfärbung

10 g Titandioxid und 2 g Farbstoff werden mit einer Mischung von 26,4 g Kokosalkydharz, 24,0 g Melamin-Formaldehydharz (50% Festkörpergehalt), 8,8 g Ethylenglykolmonomethylether und 28,8 g Xylol während 48 Stunden in einer Kugelmühle vermahlen. Wird dieser Lack auf eine Aluminiumfolie gespritzt, 30 Minuten bei Raumtemperatur vorgetrocknet und dann während 30 Minuten bei 120° eingebrannt, dann erhält man eine Lackierung, die sich bei guter Farbstärke durch eine gute Ueberlackierechtheit, eine hervorragende Lichtechtheit und gute Wetterechtheit auszeichnet.

Patentansprüche

1. Verfahren zur Herstellung von Küpenfarbstoffen der Formel I

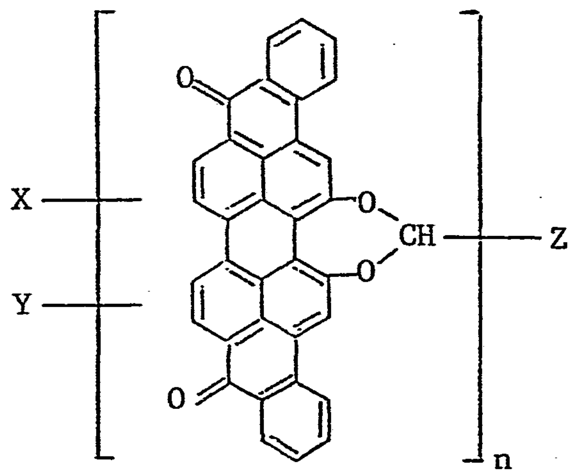

(I) ,

worin

n 1 oder 2,

Z H, gegebenenfalls substituiertes Alkyl, gegebenenfalls substituiertes Aryl oder einen heterocyclischen Rest, falls n gleich 1 ist, oder eine direkte Bindung, gegebenenfalls substituiertes Alkylen, gegebenenfalls substituiertes Arylen oder einen heterocyclischen Rest, falls n gleich 2 ist,

X H, Cl oder einen Rest der Formel $-SO_2T$, wobei T den Rest eines aliphatischen oder aromatischen primären oder sekundären Amins darstellt, und

Y H oder Cl bedeutet,

dadurch gekennzeichnet, dass man n Aequivalente Dihydroxydibenzanthron der Formel II

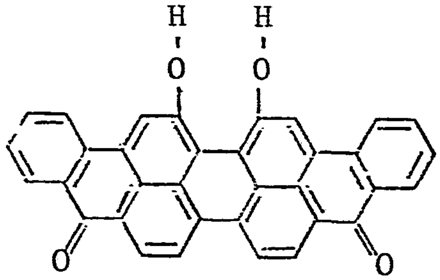

(II)

in Chlorsulfonsäure mit einem Aldehyd der Formel III

$$Z - (CHO)_n \qquad (III),$$

wobei Z und n die oben angegebene Bedeutung aufweisen, kondensiert und anschliessend, falls man Farbstoffe der Formel I herstellt, worin X und/oder Y nicht Wasserstoff bedeuten, chloriert und/oder mit Thionylchlorid und einem Amin der Formel IV

$$H - T \qquad (IV)$$

umsetzt, wobei T die oben angegebene Bedeutung aufweist.

2. Verfahren gemäss Anspruch 1, dadurch gekennzeichnet, dass man von Verbindungen der Formel III ausgeht, worin n gleich 1 ist und Z Wasserstoff, $C_1$-$C_3$-Alkyl, Phenyl oder durch Methyl, Chlor, Nitro, Sulfo oder Amino substituiertes Phenyl darstellt.

3. Verfahren gemäss Anspruch 1, dadurch gekennzeichnet, dass man von Verbindungen der Formel III, ausgeht, worin n gleich 2 ist und Z die direkte Bindung, 1,3- oder 1,4-Phenylen oder 2,5-Thiophenylen darstellt.

4. Verfahren gemäss Anspruch 1, dadurch gekennzeichnet, dass man von Verbindungen der Formel IV ausgeht, worin H-T Dimethyl- oder Diethylamin, Piperidin, Morpholin, Anilin, $C_1$-$C_3$-N-Alkylanilin, oder im Phenylring einmal durch Chlor, Methyl oder Methoxy substituiertes Anilin darstellt.

5. Verfahren gemäss Anspruch 1 zur Herstellung von Küpenfarbstoffen der Formel V

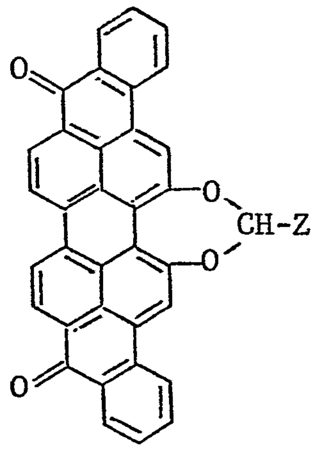

(V) ,

worin Z Wasserstoff, $C_1$-$C_3$-Alkyl, Phenyl oder durch Methyl, Chlor, Nitro, Sulfo oder Amino substituiertes Phenyl darstellt, dadurch gekennzeichnet, dass man Dihydroxydibenzanthron der Formel II

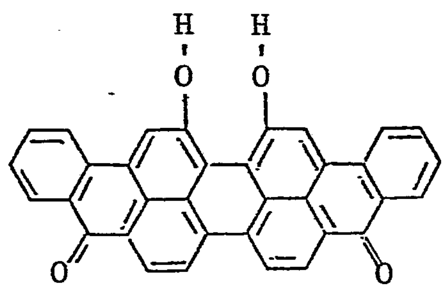

(II)

in Chlorsulfonsäure mit einem Aldehyd der Formel VI

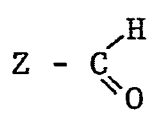

(VI)

umsetzt, wobei Z die oben angegebene Bedeutung aufweist.

6. Verfahren gemäss Anspruch 1 zur Herstellung von Küpenfarbstoffen der Formel VII

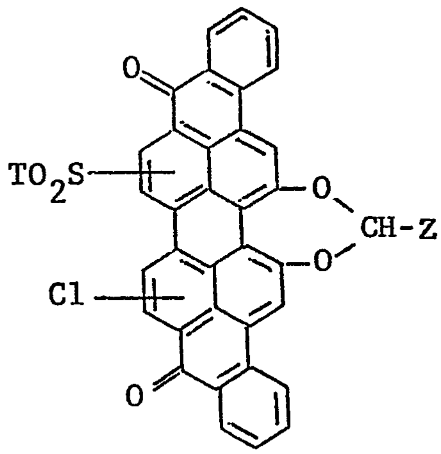

(VII)

worin Z Wasserstoff, $C_1$-$C_3$-Alkyl, Phenyl oder durch Methyl, Chlor, Nitro, Sulfo oder Amino substituiertes Phenyl darstellt, und T den Rest von Dimethyl- oder Diethylamin, Piperidin, Morpholin, Anilin, $C_1$-$C_3$-N-Alkylanilin, oder im Phenylring einmal durch Chlor, Methyl oder Methoxy substituiertem Anilin bedeutet, dadurch gekennzeichnet, dass man Dihydroxydibenzanthron der Formel II

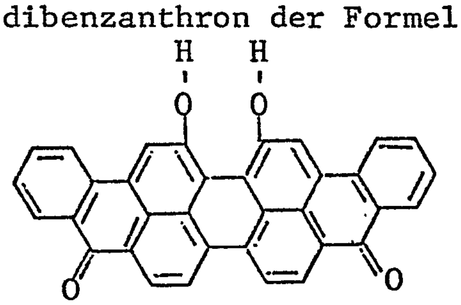

(II)

in Chlorsulfonsäure mit einem Aldehyd der Formel VI

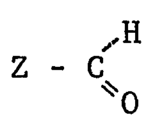

(VI)

umsetzt, wobei Z die oben angegebene Bedeutung aufweist, anschliessend gleichzeitig oder in beliebiger Reihenfolge nacheinander chloriert und mit Thionylchlorid umsetzt und zum Schluss mit Dimethyl- oder Diethylamin, Piperidin, Morpholin, Anilin, $C_1$-$C_3$-N-Alkylanilin oder im Phenylring

einmal durch Chlor, Methyl oder Methoxy substituiertem Anilin zur Reaktion bringt.

7. Verfahren gemäss einem der Ansprüche 1 bis 3, 5 oder 6, dadurch gekennzeichnet, dass man Dihydroxydibenzanthron der Formel II in die 3- bis 4fache Menge Chlorsulfonsäure gibt und anschliessend eine etwa äquivalente Menge Aldehyd langsam zugibt, wobei die Reaktionstemperatur zwischen o und 30°C, vorzugsweise zwischen 5 und 20°C, gehalten wird.

8. Verfahren gemäss einem der Ansprüche 1 bis 3 oder 6, dadurch gekennzeichnet, dass man die Chlorierung bei 10 bis 25°C mit Chlor in Gegenwart katalytischer Mengen Jod durchführt.

9. Verfahren gemäss einem der Ansprüche 1 bis 4 oder 6, dadurch gekennzeichnet, dass man die Umsetzung mit Thionylchlorid und die Reaktion zwischen dem gebildeten Farbstoffsulfochlorid und Amin bei 40 bis 90°C, vorzugsweise 55 bis 70°C durchführt und dass man pro Mol Farbstoffsulfochlorid 2,0 bis 2,5 Mol Amin einsetzt.

10. Verfahren gemäss einem der Ansprüche 1 bis 3, 6 oder 9, dadurch gekennzeichnet, dass man die Kondensation von Dihydroxydibenzanthron, die Chlorierung und die Sulfochlorierung ohne Isolierung der Zwischenprodukte durchführt.

11. Küpenfarbstoffe der Formel VIII

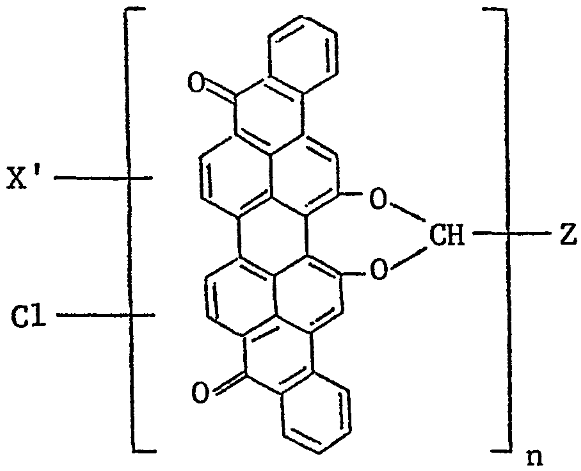

(VIII)

worin

n 1 oder 2,

Z H, gegebenenfalls substituiertes Alkyl, gegebenenfalls substituiertes Aryl oder einen heterocyclischen Rest, falls n gleich 1 ist, oder eine direkte Bindung, gegebenenfalls substituiertes Alkylen, gegebenenfalls substituiertes Arylen oder einen heterocyclischen Rest, falls n gleich 2 ist,

X' Cl oder einen Rest der Formel $-SO_2T$, wobei T den Rest eines aliphatischen oder aromatischen primären oder sekundären Amins darstellt.

12. Küpenfarbstoffe gemäss Anspruch 11, worin n gleich 1 ist, Z Wasserstoff, $C_1$-$C_3$-Alkyl, Phenyl oder durch Methyl, Chlor, Nitro, Sulfo oder Amino substituiertes Phenyl darstellt und T den Rest von Dimethyl- oder Diethylamin, Piperidin, Morpholin, Anilin, $C_1$-$C_3$-N-Alkylanilin, oder im Phenylring einmal durch Chlor, Methyl oder Methoxy substituiertem Anilin bedeutet.

13. Verwendung der nach dem Verfahren gemäss Anspruch 1 hergestellten Küpenfarbstoffe oder der Küpenfarbstoffe gemäss Anspruch 11 zum Färben und Bedrucken, insbesondere zum Färben von Cellulosefasern.

# EUROPÄISCHER RECHERCHENBERICHT

0076235
Nummer der Anmeldung

EP 82 81 0394

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-2 001 093 (CIBA-GEIGY) * Ansprüche 1-13 * | 1 | C 09 B 3/36<br>D 06 P 1/22 |
| A | US-A-1 859 146 (K. KRAUER) * Ansprüche 1-6 * | 1 | |
| A | DE-B-1 180 865 (CIBA) * Ansprüche; Beispiel 5 * | 1 | |
| A | US-A-2 888 463 (W. COHEN) * Ansprüche 1-5; Spalte 3, Zeilen 6-29 * | 1 | |
| A | US-A-2 318 266 (O. STALLMANN) * Ansprüche 1-8; Spalte 2, Zeilen 14-64 * | 1 | RECHERCHIERTE SACHGEBIETE (Int. Cl. 3) |
| A | US-A-2 515 723 (F. EASTON) * Ansprüche 1-6 * | 1 | C 09 B 3/00 |

Der vorliegende Recherchenbericht wurde für alle Patentansprüche erstellt.

| Recherchenort | Abschlußdatum der Recherche | Prüfer |
|---|---|---|
| DEN HAAG | 23-12-1982 | DELANGHE L.L.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82